# EUROPÄISCHE PATENTSCHRIFT

(11) **EP 2 915 723 B1**
(45) Veröffentlichungstag und Bekanntmachung des Hinweises auf die Patenterteilung: **27.12.2017**
(21) Anmeldenummer: 15000439.8
(22) Anmeldetag: 13.02.2015
(51) Int. Cl.: B62D 15/00, B60R 1/00

(54) **Verfahren zum Betreiben eines Lenksystems, Lenksystem und Fahrzeug**
Method for operating a steering system, steering system and vehicle
Procédé de fonctionnement d'un système de direction, système de direction et véhicule

(30) Priorität: 08.03.2014 DE 102014003302
(43) Veröffentlichungstag der Anmeldung: 09.09.2015
(73) Patentinhaber: AUDI AG, 85045 Ingolstadt (DE)
(72) Erfinder: Mayer, Stefan, DE - 85080 Gaimersheim (DE)
(74) Vertreter: Engelhardt, Harald

(56) Entgegenhaltungen:
- JP-A- 2000 280 926
- JP-A- 2006 321 434
- JP-A- 2012 040 977

## Beschreibung

Die vorliegende Erfindung betrifft ein Verfahren zum Betreiben eines Lenksystems eines Fahrzeugs, ein Lenksystem und ein Fahrzeug.

Es ist bekannt, bei einer Lenkanlage bzw. eines Lenksystems eines Kraftfahrzeugs das Lenkrad von den lenkbaren Rädern bzw. dem Lenkgetriebe oder dergleichen mechanisch zu entkoppeln. Derartige Anlagen sind beispielsweise unter dem Schlagwort "steer-by-wire" bekannt. Dabei wird ein Lenkradeinschlag von einem Sensor erfasst, das Ausgangssignal des Sensors von einem Steuergerät verarbeitet und in einen Steuerbefehl bzw. ein Ansteuerungssignal zur Ansteuerung eines elektromechanischen Aktors umgesetzt und an diesen gesendet, um einen Radlenkwinkel zu stellen. Umgekehrt werden oft Reaktionsmomente des Fahrwerks ebenfalls sensorisch erfasst, durch das Steuergerät in Befehlssignale umgewandelt, diese an einen elektromechanischen Aktor gesendet, um dem Fahrer am Lenkrad ein möglichst realistisches Reaktionsmoment zu vermitteln. Das Verhältnis von Drehstellung des Lenkrades und Einschlag der Räder kann durch das Steuergerät an Fahrsituationen angepasst werden, Störungen durch Fahrbahnunebenheiten, Seitenwind etc. können aus den Reaktionsmomenten herausgerechnet werden.

Trotz der mechanischen Entkopplung steht der Einschlag des Lenkrades noch immer in einer Relation mit dem Einschlag der Räder und umgekehrt. Dies ist bei Fahrt des Fahrzeugs erforderlich, um eine natürliche Rückmeldung der Radstellung bzw. des Radeinschlags über das Lenkrad an den Fahrer sicherzustellen. Insbesondere bei abgestelltem Fahrzeug kann daher aber, je nach Stellung der Räder, die Sicht auf das Kombiinstrument eingeschränkt sein. So können bei eingeschlagenem Lenkrad bestimmte Anzeigen oder Leuchten des Kombiinstruments verdeckt werden. Daher kann der Fahrer beispielsweise einen Statusbildschirm, den Gesamtkilometer- oder Tageskilometerstand, Signallampen oder den Tankfüllstand nur durch Verdrehen des Oberkörpers oder durch manuelle Korrektur des Lenkradeinschlags, was bei "Zündung aus" durch Entfall der Servounterstützung sehr kraftaufwändig ist bzw. durch ein Lenkradschloss verhindert wird, gut ablesen. Ist im Bereich des Kombiinstruments eine Kamera z. B. zur Beobachtung des Fahrers verbaut, kann durch einen Lenkradeinschlag die Sicht der Kamera auf den Fahrer verdeckt werden. Dadurch kann es zu Funktionseinschränkungen des Fahrerbeobachtungssystems kommen. Insbesondere kann eine videogestützte Erkennung des Fahrers durch Verdeckungen fehlschlagen. Desweiteren ist bei manchen Sportlenkrädern die Unterkante abgeflacht, um das Ein- und Aussteigen zu erleichtern. Befindet sich die abgeflachte Kante beim Ein- und Aussteigen allerdings nicht unten, kann sie nicht für eine Erleichterung sorgen.

Aus der JP 2012040977 A ist es bekannt, bei einem Steer-by-wire-System das Lenkrad während eines automatischen Parkvorgangs in einer Neutralposition zu belassen. Dadurch soll verhindert werden, dass sich die Kleidung des Fahrers in dem Lenkrad verfängt oder das Lenkrad den Fahrer verletzt.

Aus der DE 10 2012 005 674 A1 ist eine Anzeigevorrichtung mit einem Display bekannt, welches ansteuerbar ist, um eine Darstellung eines Anzeigeelements auf dem Display in Abhängigkeit von einem Lenkradwinkel eines Lenkrades zu verändern, um das Anzeigeelement auch während Kurvenfahrt wahrnehmen zu können.

Aus der DE 100 34 291 A1 ist ein Fahrzeug mit einem Vierradlenksystem bekannt, bei dem (alle) vier Räder lenkbar sind, wobei ein Schwenkmodus vorgesehen ist, bei dem im Stillstand des Fahrzeugs die nicht angetriebenen Räder in eine Stellung geschwenkt werden, um das Fahrzeug um eine zwischen den angetriebenen Rädern liegende senkrechte Achse zu schwenken. Zur Festlegung des Schwenkwinkels wird das Lenkrad benutzt. Nach dem Schwenkvorgang werden die Vorderräder wieder in eine Neutralstellung gebracht.

Aus der JP 2000 280926 A ist ein Lenksystem eines Fahrzeugs nach dem Oberbegriff des Anspruchs 1 bekannt, bei dem das Lenkrad und die lenkbaren Räder mechanisch voneinander getrennt sind. Das Lenksystem weist eine Lenkradverstellvorrichtung auf, die ausgebildet ist, das Lenkrad bei abgeschaltetem Motor in eine Neutralstellung zu verstellen.

Die genannten sind Anwendungen, die durch die Entkopplung von Lenkrad und gelenkten Rädern in einem Steer-by-wire-System ermöglicht werden.

Eine Aufgabe der vorliegenden Erfindung besteht darin, die oben beschriebenen Nachteile im Stand der Technik wenigstens in Teilaspekten zu vermeiden.

Insbesondere besteht eine Aufgabe der vorliegenden Erfindung darin, zu verhindern, dass bei ausgeschalteter Zündung oder bei Stillstand des Fahrzeugs eine Sichtlinie zwischen einem Kombiinstrument und einem Fahrer durch Bereiche des Lenkrades abgeschattet ist. Eine weitere Aufgabe der vorliegenden Erfindung besteht darin, bei ausgeschalteter Zündung oder bei Stillstand des Fahrzeugs die Bequemlichkeit bei Ein- und Aussteigen zu verbessern.

Die vorstehend genannte Aufgabe wird wenigstens in Teilaspekten gelöst durch ein erfindungsgemäßes Verfahren mit den Merkmalen des Anspruchs 1, ein erfindungsgemäßes Lenksystem mit den Merkmalen des Anspruchs 7 und ein erfindungsgemäßes Fahrzeug mit den Merkmalen des Anspruchs 8. Dabei gelten Merkmale und Einzelheiten, die im Zusammenhang mit einem Erfindungsaspekt beschrieben sind, auch im Zusammenhang mit jedem anderen Erfindungsaspekt sowie jeweils umgekehrt und wechselweise, so dass bezüglich der Offenbarung zu den einzelnen Erfindungsaspekten stets wechselseitig Bezug genommen wird beziehungsweise werden kann.

Ein erster Gesichtspunkt der vorliegenden Erfindung betrifft ein Verfahren zum Betreiben eines Lenksystems eines Fahrzeugs, wobei das Lenksystem ein Lenkrad, ein lenkbares Rad, wobei das lenkbare Rad und das Lenkrad mechanisch entkoppelt sind, einen Lenkradstellantrieb zum Stellen einer Drehstellung des Lenkrades, einen Radlenkantrieb zum Lenken des lenkbaren Rades, und ein Steuergerät zum Ansteuern des Radlenkantriebs und des Lenkradstellantriebs aufweist. Erfindungsgemäß wird das Lenkrad durch den Lenkradstellantrieb auf Veranlassung des Fahrers unabhängig von einem Zustand der Zündung, auf Bestätigung durch den Fahrer oder durch Rückmeldung einer auf den Fahrer gerichteten Kamera automatisch in eine von einem Radeinschlag des lenkbaren Rades unabhängige Neutralstellung gestellt. Unter einer Entkopplung von lenkbarem Rad und Lenkrad ist zu verstehen, dass das lenkbare Rad und das Lenkrad unabhängig von einander stellbar sind, wie es einleitend beschrieben wurde. Durch die erfindungsgemäße Steuerung kann bei ausgeschalteter Zündung eine Stellung des Lenkrades eingestellt werden, welche die eingangs beschriebenen Nachteile vermeidet.

Vorzugsweise ist die Neutralstellung eine Stellung, in welcher eine freie Sicht des Fahrers auf vorbestimmte Bereiche eines Kombiinstruments des Fahrzeugs ermöglicht wird. Mit anderen Worten, eine Sichtlinie zwischen dem Fahrer und diesen vorbestimmten Bereichen, die in anderen Stellungen des durch das Lenkrad Lenkrades verdeckt wäre, wird in der Neutralstellung nicht verdeckt. Wenn der vorbestimmte Bereich eine Kamera zur Fahrerbeobachtung umfasst, kann ein Fahrer-Erkennungssystem, das die Kamera verwendet, bei Start des Fahrzeugs den Fahrer erkennen, d. h., das Fahrzeug kann unabhängig vom Radeinschlag betriebsbereit sein. Wenn der vorbestimmte Bereich einen Multifunktionsbildschirm, Signallampen, eine Statusanzeige, eine Kilometerstandsanzeige, eine Tankanzeige oder dergleichen umfasst, kann der Fahrer Informationen, die bereits beim Einsteigen oder auch beim Abstellen des Fahrzeugs bedeutsam sein können, erkennen, ohne den Oberkörper zu verdrehen oder das Lenkrad bei ausgeschalteter Zündung manuell korrigieren zu müssen. Wenn die Neutralstellung eine Stellung ist, in welcher ein abgeflachter Abschnitt des Lenkrades nach unten zu stehen kommt, kann auch das Ein- und Aussteigen erleichtert werden.

Das Stellen des Lenkrades in die Neutralstellung kann auf Bestätigung durch einen Fahrer oder durch Rückmeldung einer auf den Fahrer gerichteten Kamera durchgeführt werden. In der erstgenannten Alternative kann dem Fahrer noch einmal bewusst gemacht werden, dass das Lenkrad in die Neutralstellung gebracht wird, und es kann ihm auch Gelegenheit gegeben werden, die Hände vom Lenkrad zu nehmen. In der zweitgenannten Alternative meldet/triggert beispielsweise eine Kamera, die vorzugsweise derart positioniert ist im Fahrzeug, dass diese durch das Lenkrad oder an dem Lenkrad vorbei auf den Fahrer gerichtet ist, dass die Sicht der Kamera auf den Fahrer, insbesondere durch das Lenkrad verdeckt ist.

Es kann vorgesehen sein, dass das Lenkrad durch den Lenkradstellantrieb auf Veranlassung des Fahrers unabhängig von einem Zustand der Zündung in die Neutralstellung bzw. in eine Stellung entsprechend einem Radeinschlag des lenkbaren Rades gestellt wird. Dies kann die vorstehend beschriebenen Vorteile der Erfindung auch dann ausnutzen, wenn der Fahrer bei laufendem Motor aus- oder einsteigen möchte.

In einer bevorzugten Weiterbildung der Erfindung kann das Lenkrad durch den Lenkradstellantrieb auf Betätigung durch den Fahrer oder durch Rückmeldung der auf den Fahrer gerichteten Kamera automatisch in eine Stellung entsprechend einem Radeinschlag des lenkbaren Rades gestellt werden. Hierdurch wird das Fahrzeug in einem Zustand in Betriebsbereitschaft gebracht, in dem ein natürliches Lenkempfinden sichergestellt ist. Wie beim Stellen in die Neutralstellung kann das Lenkrad auf Bestätigung durch einen Fahrer hin verstellt werden. Im letzteren Fall kann dem Fahrer auch Gelegenheit gegeben werden, sich ausreichend Zeit zum Ablesen von für ihn bedeutsamen Daten von dem Kombiinstrument zu nehmen. Ferner ist ebenfalls denkbar, dass das Lenkrad durch eine Rückmeldung einer auf den Fahrer gerichteten Kamera automatisch in eine Stellung entsprechend einem Radeinschlag des lenkbaren Rades gestellt wird.

Vorzugsweise wird ein Wegfahren des Fahrzeugs verhindert, wenn sich das Lenkrad in der Neutralstellung befindet und die Neutralstellung nicht einem Radeinschlag des lenkbaren Rades entspricht. Dadurch wird auch sichergestellt, dass das Fahrzeug nur dann in Bewegung gesetzt werden kann, wenn dem Fahrer zuverlässig eine zutreffende Rückmeldung über den Lenkeinschlag gegeben wird.

Auch ist es vorzuziehen, wenn das Stellen des Lenkrades in die Neutralstellung nur dann ermöglicht wird, wenn sich das Fahrzeug im Stillstand befindet. So kann auch eine gefährliche Situation vermieden werden, wenn die Zündung während der Fahrt eine Fehlfunktion aufweist.

Die Erfindung betrifft in einem weiteren Gesichtspunkt ein Lenksystem eines Fahrzeugs, wobei das Lenksystem ein Lenkrad, ein lenkbares Rad, wobei das lenkbare Rad und das Lenkrad mechanisch entkoppelt sind, einen Lenkradstellantrieb zum Stellen einer Drehstellung des Lenkrades, einen Radlenkantrieb zum Lenken des lenkbaren Rades, und ein Steuergerät zum Ansteuern des Radlenkantriebs und des Lenkradstellantriebs aufweist. Erfindungsgemäß ist das Steuergerät ausgebildet, das Lenksystem durch ein Verfahren gemäß vorstehender Beschreibung zu betreiben.

Die Erfindung betrifft in einem weiteren Gesichtspunkt ein Fahrzeug mit einem Lenksystem, welches ein Lenkrad, ein lenkbares Rad, wobei das lenkbare Rad und das Lenkrad mechanisch entkoppelt sind, einen Lenkradstellantrieb zum Stellen einer Drehstellung des Lenkrades, einen Radlenkantrieb zum Lenken des lenkbaren Rades, und ein Steuergerät zum Ansteuern des Radlenkantriebs und des Lenkradstellantriebs aufweist. Erfindungsgemäß ist das Lenksystem gemäß vorstehender Beschreibung ausgebildet.

Weitere Merkmale, Aufgaben und Wirkungen der Erfindung ergeben sich aus der Beschreibung und den beigefügten Zeichnungen. In den Zeichnungen zeigt bzw. zeigen jeweils schematisch:
- Fig. 1: ein Fahrzeug mit einem Lenksystem nach einem ersten Ausführungsbeispiel der vorliegenden Erfindung,
- Fign. 2A und 2B: ein Ablaufdiagramm eines Prozesses zum Betreiben eines Lenksystems nach einem weiteren Ausführungsbeispiel der vorliegenden Erfindung,
- Fign. 3 und 4: Ablaufdiagramme von Teilprozessen in dem Prozess von Fign. 2A und 2B.

Nachstehend werden Ausführungsbeispiele der Erfindung anhand der beigefügten Zeichnungen im Einzelnen beschrieben. Dabei sind gleiche bzw. gleich wirkende Bauteile in mehreren Figuren jeweils mit den gleichen Bezugszeichen versehen. Bauelemente und Merkmale, Zwecke und Wirkungen, die in Bezug auf ein Ausführungsbespiel beschrieben werden, sind, soweit nicht ausdrücklich oder ersichtlich ausgeschlossen, als in jedem anderen Ausführungsbeispiel anwendbar anzunehmen und sollen auch in Bezug auf das jeweils andere Ausführungsbeispiel als offenbart gelten, auch wenn sie dort nicht ausdrücklich gezeigt und/oder beschrieben werden. Es versteht sich ferner, dass die Zeichnungen als schematisch zu verstehen sind und ihnen keine Einschränkungen im Hinblick auf konkrete Abmessungen oder Größenverhältnisse entnommen werden sollen, es sei denn, dies wäre ausdrücklich so beschrieben. Es versteht sich ferner, dass in den Zeichnungen Einzelheiten, die für das Verständnis der Erfindung nicht wesentlich sind, weggelassen sein können.

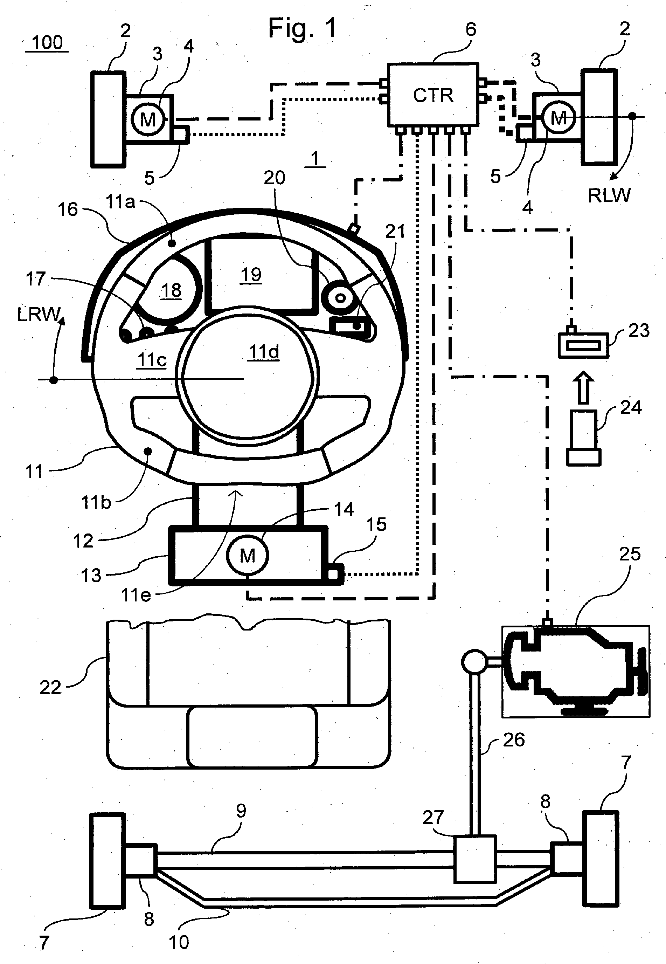

Fig. 1 zeigt ein schematisches Schaubild eines Fahrzeugs 100 mit einem Lenksystem 1 nach einem Ausführungsbeispiel der vorliegenden Erfindung. Es ist anzumerken, dass sowohl das Fahrzeug 100 als auch das Lenksystem 1 separate Ausführungsbeispiele der vorliegenden Erfindung sind.

In diesem Ausführungsbeispiel ist das Fahrzeug 100 ein vierrädriges Kraftfahrzeug bzw. Automobil und ist das Lenksystem 1 ein sogenanntes Steer-by-Wire-System. Gemäß der Darstellung in Fig. 1 weist das Lenksystem 1 zwei lenkbare Räder 2 auf, die im vorliegenden Ausführungsbeispiel Vorderräder sind. Die lenkbaren Räder 2 sind jeweils mittels einer Radaufhängung 3 mit einer Tragstruktur (nicht näher dargestellt) des Fahrzeugs 100 verbunden. Die Radaufhängungen 3 weisen jeweils einen elektromechanischen Radlenkantrieb 4 und einen Radlenkwinkelsensor 5 auf. Ein Radlenkwinkel RLW entspricht einem Lenkeinschlag des jeweiligen Rades 2. Ein Steuergerät (CTR) 6 ist jeweils über eine Steuerbefehlsleitung (gestrichelt dargestellt) mit den Radlenkantrieben 4 verbunden und ist jeweils über eine Sensorsignalleitung (gepunktet dargestellt) mit den Radlenkwinkelsensoren 5 verbunden. Zwei nicht lenkbare Räder 7, die über eine Radaufhängung 8 mit der Tragstruktur des Fahrzeugs 100 verbunden sind, bilden die Hinterräder des Fahrzeugs 100. Die Radaufhängungen 8 sind über eine Achsstruktur 9 mit einer Stabilisierungsstange 10 miteinander verbunden.

Ein Lenkrad 11 weist einen oberen Greifbereich 11a, einen unteren Greifbereich 11b, eine zweiteilige Querstrebe 11c und eine Nabe 11d auf. Der untere Greifbereich 11e weist einen abgeflachten Bereich 11e auf. Das Lenkrad 11 ist mit einer Lenksäule 12 verbunden, die in einem Lenksäulenlager 13 an der Tragstruktur des Fahrzeugs 100 gelagert ist. Das Lenksäulenlager 13 weist einen Lenkradstellantrieb 14 und einen Lenkradwinkelsensor 15 auf. Der Lenkradstellmotor 14 ist über eine Steuerbefehlsleitung (gestrichelt dargestellt) und der Lenkradwinkelsensor 15 ist über eine Sensorsignalleitung (gepunktet dargestellt) mit dem Steuergerät 6 verbunden. Das Steuergerät ist ausgelegt, Ausgangssignale der Radlenkwinkelsensoren 5 und des Lenkradwinkelsensors 15 zu empfangen und zu verarbeiten und Steuerbefehlssignale für die Radlenkantriebe 4 und den Lenkradstellmotor 14 zu berechnen und zu senden.

Somit ist das Lenksystem 1 ein sogenanntes Steer-by-Wire-System, bei welchem das Lenkrad 11 von den lenkbaren Rädern 2 mechanisch entkoppelt ist.

Das Fahrzeug 100 weist ein Kombiinstrument 16 auf, das von einem Fahrer aus gesehen hinter dem Lenkrad 11 angeordnet ist. Das Kombiinstrument 16 ist in einer Instrumententafel (nicht näher dargestellt) des Fahrzeugs 100 eingebaut. Das Kombiinstrument 16 weist in diesem Ausführungsbeispiel mehrere Signallampen 17, ein Rundinstrument 18, einen Multifunktionsbildschirm 19, eine Kamera 20 und eine Statusanzeige 21 auf. In der dargestellten Situation ist das Lenkrad 11 in einer Neutralstellung gezeigt, in welcher die Querstrebe 11c waagerecht angeordnet ist, der obere Greifbereich 11a oben liegt, und der untere Greifbereich 11b mit dem abgeflachten Bereich 11e unten liegt. Da der obere Greifbereich 11a oben liegt, gewährt ein Freiraum zwischen dem oberen Greifbereich 11a und der Querstrebe 11c eine freie Sicht auf die Instrumente 17-21 des Kombiinstruments 16. Mit anderen Worten, eine Sichtlinie zwischen den genannten Bereichen des Kombiinstruments und den Augen eines auf einem Fahrersitz 22 des Fahrzeugs 11 sitzenden Fahrers (nicht näher dargestellt) ist durch das Lenkrad 11 nicht abgeschattet. Wie aus der Fig. 1 ersichtlich, werden, wenn das Lenkrad 11 im Uhrzeigersinn gedreht wird, zunächst die Signallampen 17, dann das Rundinstrument 18 und der Multifunktionsbildschirm 19 u. s. w. wenigstens teilweise abgeschattet, und werden, wenn das Lenkrad 11 gegen den Uhrzeigersinn gedreht wird, zunächst die Statusanzeige 21, dann die Kamera 20 und der Multifunktionsbildschirm 19 u. s. w. wenigstens teilweise abgeschattet.

Das Fahrzeug weist ferner ein Zündschloss 23 zur Aufnahme eines Zündschlüssels 24 auf. Der Zündschlüssel 24 kann ein elektronischer oder ein Mechanischer Schlüssel sein. Das Zündschloss 23 ist über eine Signalleitung mit dem Steuergerät 6 verbunden. Das Zündschloss 23 ist in der Lage, den Zündschlüssel 24 aufzunehmen, Zündstellungen zu erkennen, den Zündschlüssel 24 zu verriegeln und freizugeben.

Die lenkbaren (Hinter-)Räder 7 sind durch einen Fahrantrieb 25 über einen Antriebsstrang 26 und ein Differenzial 27 antreibbar. Der Fahrantrieb 25, der in dem Ausführungsbeispiel als eine Motor/Getriebeeinheit mit Kupplung ausgebildet ist, ist über eine Signalleitung mit dem Steuergerät 6 verbunden.

Auch das Kombiinstrument 16 ist über eine Signalleitung mit dem Steuergerät 6 verbunden.

Es versteht sich, dass das Steuergerät 6 auch nach einzelnen Funktionen unterteilt bzw. beliebig verteilt oder kombiniert sein kann. Das Steuergerät 6 kann also insbesondere als schematischer Platzhalter für mehrere Steuergeräte bzw. einen Verbund von Steuergeräten verstanden werden. Die Signalleitungen können jeweils Befehls- und/oder Sensorsignalleitungen enthalten, die mit Stellern und/oder Sensoren der jeweiligen Bauelemente verbunden sind. Im Bereich des Kombiinstruments 16 können Befehlssignale auch Signale sein, die eine Anzeige durch die Signallampen 17, das Rundinstrument 18, den Multifunktionsbildschirm 19 oder die Statusanzeige 21 bewirken, und können Sensorsignale auch Signale sein, die Schalterbetätigungen, Auswahl auf dem berührungssensitiven Multifunktionsbildschirm 19 oder Bildsignale der Kamera 20 sein.

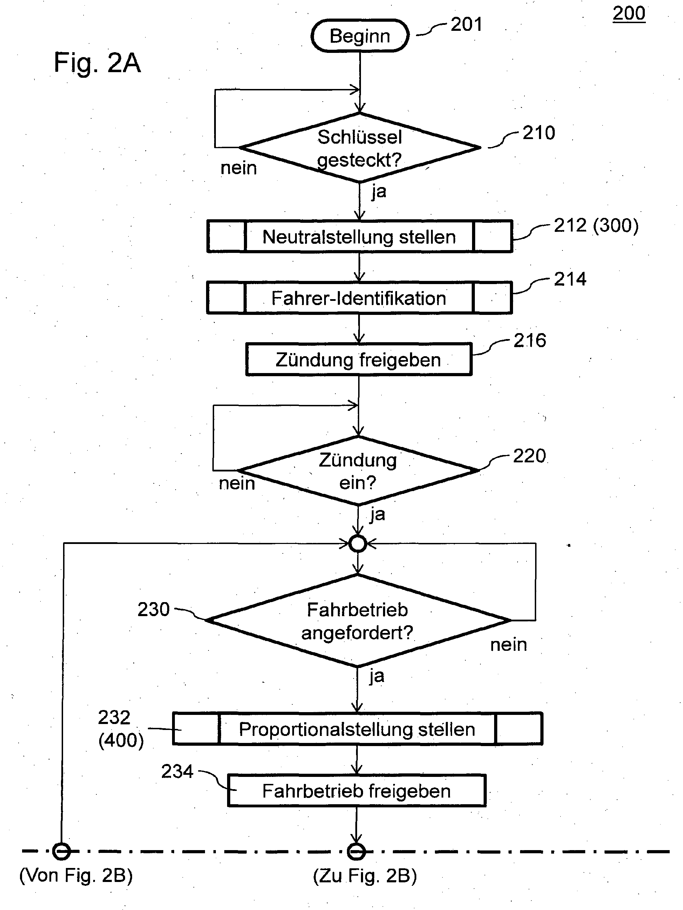

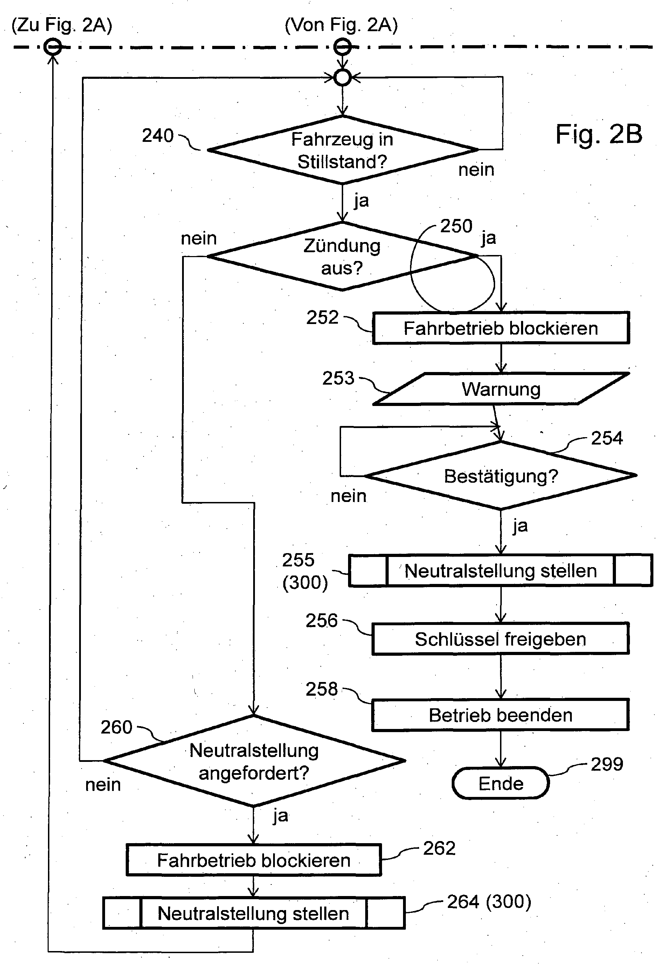

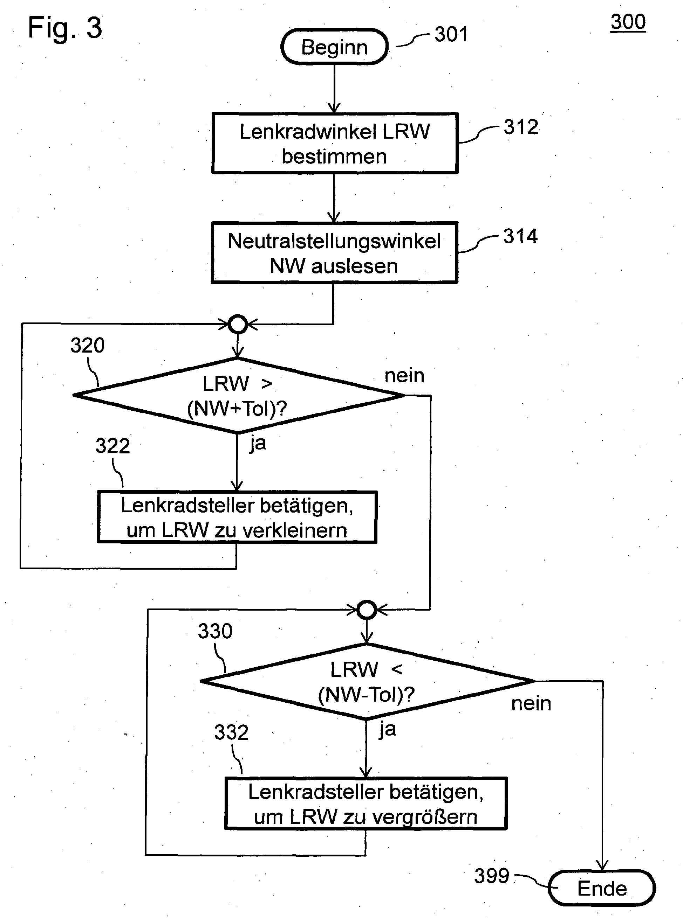

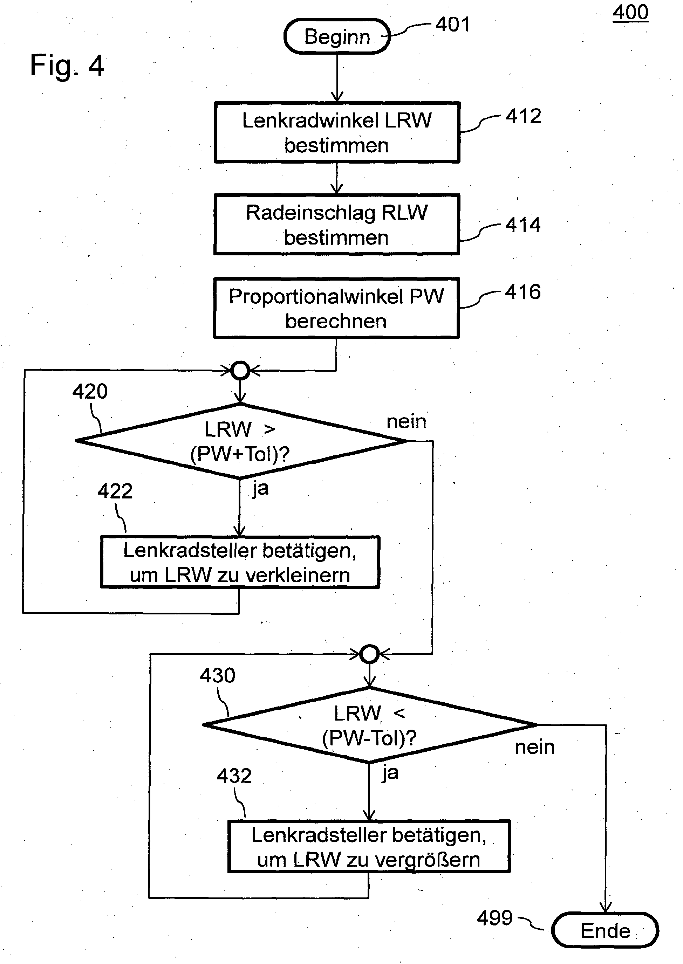

Das Lenksystem 1 wird durch ein Verfahren betrieben, das einen in Fign. 2A, 2B dargestellten Prozess 200 mit in Fign. 3, 4 dargestellten Teilprozessen 300, 400 aufweist. Im Zusammenhang mit den Fign. 2A, 2B, 3 und 4 genannte Bauelemente 1 bis 27 verweisen auf die Darstellung in Fig. 1.

Nach Aufruf bzw. Beginn des Prozesses 200 (Schritt 201) wird zunächst geprüft, ob der Schlüssel (Zündschlüssel) 24 in das Zündschloss 23 gesteckt ist beziehungsweise in Funkreichweite ist oder nicht. Alternativ dazu kann nach Aufruf bzw. Beginn des Prozesses 200 (Schritt 201) zunächst geprüft werden, ob die Tür des Fahrzeugs geöffnet beziehungsweise entriegelt ist. (Schritt 210). Diese Prüfung in Schritt 210 wird so lange durchgeführt, wie die Antwort "nein" ist. Wenn die Antwort in Schritt 210 "ja" ist, wird das Lenkrad 11 durch den Lenkradstellantrieb 14 in die Neutralstellung gestellt (Schritt 212 bzw. Teilprozess 300, der in Fig. 3 näher dargestellt ist und später beschrieben wird). Da in der Neutralstellung die Sicht zwischen der Kamera 20 und dem Fahrer auf dem Fahrersitz 22 frei ist, kann die Kamera den Fahrer erfassen. Das Erfassungsergebnis der Kamera 20 wird einem Teilprozess einer Fahrer-Identifikation (Schritt 214) zugeführt. Der Schritt 214 zur Fahrer-Identifikation ist erst dann beendet, wenn ein für das Fahrzeug 100 registrierter Fahrer erkannt wurde. DerTeilprozess der Fahrer-Identifikation sowie ein Prozess einer Registrierung von Fahrern sind nicht Teil dieser Erfindung und daher nicht näher dargestellt. Alternativ dazu ist auch eine Personalisierung des Fahrzeugs möglich. D.h., bei nicht erkanntem Fahrer würde in diesem Fall trotzdem die Zündung freigegeben werden. Die Systeme des Fahrzeugs können dann lediglich nicht an den Fahrer angepasst werden. Nach erfolgreicher Fahrer-Identifikation wird durch das Zündschloss 23 die Zündung freigegeben (Schritt 216). Nun wird geprüft, ob die Zündung eingeschaltet wurde oder nicht (Schritt 220). Diese Prüfung in Schritt 220 wird so lange durchgeführt, wie die Antwort "nein" ist. Wenn die Antwort in Schritt 220 "ja" ist, wird ferner geprüft, ob ein Fahrbetrieb durch den Fahrer angefordert wurde oder nicht (Schritt 230). Eine solche Anforderung kann beispielsweise über den Multifunktionsbildschirm 19 (Toucheingabe), einen Schalter oder eine Spracheingabe erfolgen. Diese Prüfung in Schritt 230 wird so lange durchgeführt, wie die Antwort "nein" ist. Wenn die Antwort in Schritt 230 "ja" ist, wird das Lenkrad 11 durch den Lenkradstellantrieb 14 in die Proportionalstellung gestellt (Schritt 232 bzw. Teilprozess 400, der in Fig. 4 näher dargestellt ist und später beschrieben wird). Die Proportionalstellung ist eine Lenkradstellung, die einem Radlenkwinkel der lenkbaren Räder 2 entspricht. Damit entspricht der Schritt 230 einer Anforderung der Proportionalstellung durch den Fahrer, die beispielsweise über den Multifunktionsbildschirm 19, einen Schalter oder eine Spracheingabe erfolgen kann. Danach wird der Fahrbetrieb des Fahrzeugs 100 freigegeben (Schritt 234), d. h., das Fahrzeug kann durch Betreiben des Fahrantriebs 25 bewegt werden. Die Freigabe des Fahrbetriebs kann auch ein Lösen von Bremsen beinhalten.

Der weitere Ablauf des Prozesses 200 ist in Fig. 2B dargestellt. Nach Freigabe des Fahrbetriebs wird geprüft, ob sich das Fahrzeug 100 im Stillstand befindet oder nicht (Schritt 240). Diese Prüfung in Schritt 240, die beispielsweise durch Auswertung von Sensorsignalen des Fahrantriebs 25 oder von Bremsen oder eines Raddrehgebers erfolgen kann, wird so lange durchgeführt, wie die Antwort "nein" ist. Wenn die Antwort in Schritt 240 "ja" ist, wird ferner geprüft, ob die Zündung des Fahrzeugs ausgeschaltet wurde oder nicht (Schritt 250). Wenn die Antwort in Schritt 240 "ja" ist, wird zunächst der Fahrbetrieb blockiert (Schritt 252), sodass das Fahrzeug nicht mehr bewegt werden kann. Die Blockierung des Fahrbetriebs kann beispielsweise eine Stilllegung des Fahrantriebs 25 und/oder ein Feststellen von Bremsen umfassen. Dann wird eine Warnung ausgegeben, die den Fahrer in Kenntnis setzt, dass das Lenkrad 11 nun in die Neutralstellung gestellt wird (Schritt 253), und es wird geprüft, ob der Fahrer die Neutralstellung bestätigt hat (Schritt 254). Erst dann wird das Lenkrad 11 in die Neutralstellung gestellt (Schritt 255 bzw. Teilprozess 300), der Schlüssel (Zündschlüssel) 23 durch das Zündschloss 24 freigegeben (Schritt 256) und danach der Betrieb des Fahrzeugs beendet (Schritt 258). Dann endet der Prozess 200 (Schritt 299).

Allgemein ist es bei dem Verfahren zum Betreiben eines Lenksystems eines Fahrzeugs möglich, dass der zuvor beschriebene Warnungs-/Bestätigungsschritt vor jeder Lenkradverstellung durchgeführt wird.

Wenn die Antwort in Schritt 250 "nein" ist (also die Zündung nicht ausgeschaltet ist), wird zunächst geprüft, ob eine Neutralstellung des Lenkrades 11 durch den Fahrer angefordert wurde oder nicht (Schritt 260). Wenn die Antwort in Schritt 260 "ja" ist, wird der Fahrbetrieb blockiert, wie oben zu Schritt 252 beschrieben (Schritt 262), sodass das Fahrzeug nicht mehr bewegt werden kann. Erst dann wird das Lenkrad 11 durch den Lenkradstellantrieb 14 in die Neutralstellung gestellt (Schritt 264 bzw. Teilprozess 300). Danach springt der Prozess zurück zu Schritt 230 (Fig. 2A), um auf Anforderung des Fahrers hin den Fahrbetrieb wieder freigeben (vgl. vorstehende Beschreibung hierzu). Durch diesen Prozessweg über die Schritte 250, 260, 262, 264 wird ermöglicht, dass der Fahrer auch bei eingeschalteter Zündung das Fahrzeug verlassen kann und das Lenkrad 11 trotzdem in die Neutralstellung gestellt werden kann.

Wenn die Antwort in Schritt 260 "nein" ist (also keine Neutralstellung angefordert würde), springt der Prozess zurück zu Schritt 240, um zu prüfen, ob sich das Fahrzeug im Stillstand befindet. Mit anderen Worten, die Schritte 240, 250 und 260 bilden eine Schleife, die erst verlassen wird, wenn die Antwort in Schritt 250 oder 260 "ja" ist. Der gesamte Prozess 200 wird nur beendet, wenn die Antwort in Schritt 250 "ja" ist. Es versteht sich, dass nach Beendigung des Betriebs in Schritt 299 ein Standby-Modus aktiviert werden kann, was mit einem erneuten Beginn des Prozesses 200 (Schritt 201)zusammenfallen kann.

Wie vorstehend beschrieben, wird vor dem Schritt 255, in welchem das Lenkrad 11 mittels des Teilprozesses 300 in die Neutralstellung gestellt wird, eine Warnung ausgegeben und eine Bestätigung des Fahrers abgewartet. Dies stellt sicher, dass der Fahrer sich die bevorstehende Verstellung des Lenkrades 11 bewusst macht. Statt einer Bestätigung kann auch nur die Warnung ausgegeben werden. Die Warnung kann über eine der Signallampen 17, den Multifunktionsbildschirm 19, die Statusanzeige 21 oder auf andere Weise, etwa akustisch, ausgegeben werden. Die Bestätigung kann über den Multifunktionsbildschirm 19 oder auf andere Weise, etwa einen Schalter durch Spracheingabe, gegeben werden.

Der Teilprozess 300, der in Schritten 212, 255 oder 264 durchgeführt wird, um das Lenkrad 11 in die Neutralstellung zu stellen, wird nachstehend anhand des Ablaufdiagramms in Fig. 3 beschrieben.

Nach Aufruf bzw. Beginn des Teilprozesses 300 (Schritt 301) wird zunächst der Lenkradwinkel LRW bestimmt (Schritt 312). Danach wird der Neutralstellungswinkel NW, welcher der Neutralstellung des Lenkrades 11 entspricht, aus einem Speicher des Steuergeräts 6 ausgelesen (Schritt 314). Im Allgemeinen wird der Neutralstellungswinkel NW Null Grad sein, die Erfindung ist aber darauf nicht beschränkt. Der Neutralstellungswinkel NW kann auch einer gewissen Schrägstellung des Lenkrades 11 entsprechen, wenn dann die Sicht auf das Kombiinstrument 16 bzw. einen ausgewählten Bereich desselben besser ist. Dann wird geprüft, ob der Lenkradwinkel LRW größer als der Neutralstellungswinkel NW zuzüglich einer Toleranz Tol ist oder nicht (Schritt 320). Wenn die Antwort in Schritt 320 "nein" ist, wird geprüft, ob der Lenkradwinkel LRW kleiner als der Neutralstellungswinkel NW abzüglich der Toleranz Tol ist oder nicht (Schritt 330). Wenn die Antwort in Schritt 330 "nein" ist, endet der Teilprozess 300 (Schritt 399), da der Lenkradwinkel LRW offensichtlich gleich dem Neutralstellungswinkel NW innerhalb der vorgegebenen Toleranz ± Tol ist.

Wenn die Antwort in Schritt 320 "ja" ist, wird der Lenkradstellantrieb 14 betätigt, um den Lenkradwinkel LRW zu verkleinern (Schritt 322). Dies wird so lange wiederholt, bis der Lenkradwinkel LRW höchstens dem Neutralstellungswinkel NW zuzüglich der Toleranz Tol entspricht. Dann ist die Antwort in Schritt 320 "nein", und der Prozess läuft über Schritt 330 ("nein", da der Lenkradwinkel LRW nun innerhalb des Toleranzbereichs ± Tol um den Neutralstellungswinkel NW liegt) zu Schritt 399, womit der Teilprozess 300 endet.

Wenn die Antwort in Schritt 330 "ja" ist, wird der Lenkradstellantrieb 14 betätigt, um den Lenkradwinkel LRW zu vergrößern (Schritt 332). Dies wird so lange wiederholt, bis der Lenkradwinkel LRW wenigstens dem Neutralstellungswinkel NW abzüglich der Toleranz Tol entspricht. Dann ist die Antwort in Schritt 330 "nein", und der Prozess läuft zu Schritt 399, womit der Teilprozess 300 endet.

Der Teilprozess 400, der in Schritt 232 durchgeführt wird, um das Lenkrad 11 in die Proportionalstellung zu stellen, wird nachstehend anhand des Ablaufdiagramms in Fig. 4 beschrieben.

Nach Aufruf bzw. Beginn des Teilprozesses 400 (Schritt 401) wird zunächst der Lenkradwinkel LRW bestimmt (Schritt 412). Danach wird der Radlenkwinkel RLW, der einem Radeinschlag der lenkbaren Räder 2 entspricht, aus einem Ausgangssignal des Radlenkwinkelsensors 5 bestimmt (Schritt 414). Aus dem Radlenkwinkel RLW wird sodann der Proportionalwinkel PW als derjenige Winkel des Lenkrades 11, der dem Radlenkwinkel RLW entspricht, berechnet. Dann wird geprüft, ob der Lenkradwinkel LRW größer als der Proportionalwinkel PW zuzüglich einer Toleranz Tol ist oder nicht (Schritt 420). Wenn die Antwort in Schritt 420 "nein" ist, wird geprüft, ob der Lenkradwinkel LRW kleiner als der Proportionalwinkel PW abzüglich der Toleranz Tol ist oder nicht (Schritt 430). Wenn die Antwort in Schritt 430 "nein" ist, endet der Teilprozess 400 (Schritt 499), da der Lenkradwinkel LRW offensichtlich gleich dem Proportionalwinkel PW innerhalb der vorgegebenen Toleranz ± Tol ist.

Wenn die Antwort in Schritt 420 "ja" ist, wird der Lenkradstellantrieb 14 betätigt, um den Lenkradwinkel LRW zu verkleinern (Schritt 422). Dies wird so lange wiederholt, bis der Lenkradwinkel LRW höchstens dem Proportionalwinkel PW zuzüglich der Toleranz Tol entspricht. Dann ist die Antwort in Schritt 420 "nein", und der Prozess läuft über Schritt 430 ("nein", da der Lenkradwinkel LRW nun innerhalb des Toleranzbereichs ±Tol um den Proportionalwinkel PW liegt) zu Schritt 499, womit der Teilprozess 400 endet.

Wenn die Antwort in Schritt 430 "ja" ist, wird der Lenkradstellantrieb 14 betätigt, um den Lenkradwinkel LRW zu vergrößern (Schritt 432). Dies wird so lange wiederholt, bis der Lenkradwinkel LRW wenigstens dem Proportionalwinkel PW abzüglich der Toleranz Tol entspricht. Dann ist die Antwort in Schritt 430 "nein", und der Prozess läuft zu Schritt 499, womit der Teilprozess 400 endet.

Obschon vorstehend gleich bezeichnet, kann die Toleranz Tol in den Teilprozessen 300, 400 unterschiedlich sein, sie kann auch in positiver und negativer Richtung unterschiedlich sein.

Der vorstehend beschriebene Prozess 200 mit Teilprozessen 300, 400 entspricht einem Verfahren zum Betreiben des Lenksystems 1 und wird durch das Steuergerät 6 gesteuert.

In dem vorliegenden Ausführungsbeispiel sind die lenkbaren Räder 2 jeweils mit einem eigenen, einzeln ansteuerbaren Radlenkantrieb 4 lenkbar. Die Erfindung ist hierauf nicht beschränkt. Vielmehr können die lenkbaren Räder 2 einen gemeinsamen Radlenkantrieb 4 aufweisen, der beispielsweise über einen Zahnstangenmechanismus auf beide Radaufhängungen 3 wirkt. Auch ist die Erfindung nicht auf lenkbare Vorderräder beschränkt. Vielmehr können auch (zusätzlich oder nur) die Hinterräder des Fahrzeugs 100 lenkbare Räder sein. Die Erfindung ist auch nicht auf vierrädrige Fahrzeuge mit zwei oder vier lenkbaren Rädern beschränkt. Die Erfindung ist vielmehr auch auf Fahrzeuge mit zwei, drei, fünf oder mehr Rädern anwendbar, von denen eine beliebige Anzahl lenkbar sein kann.

In der vorliegenden Anmeldung ist die Verwendung des Singulars nicht nur im ausschließlichen, sondern auch im schlicht feststellenden Sinne zu verstehen. So sind beispielsweise, wenn gesagt wird, dass das Fahrzeug ein lenkbares Rad aufweist, die Offenbarung und der Schutzumfang nicht auf eine Struktur mit einem einzigen lenkbaren Rad beschränkt. Vielmehr soll damit nur ausgedrückt werden, dass das Fahrzeug (mindestens) ein lenkbares Rad aufweist, aber auch mehrere lenkbare Räder aufweisen kann.

### Bezugszeichenliste

- 1: Fahrzeug
- 2: Lenkbares Rad (Vorderrad)
- 3: Radaufhängung
- 4: Radlenkantrieb
- 5: Radlenkwinkelsensor
- 6: Steuergerät
- 7: Nicht lenkbares Rad (Hinterrad)
- 8: Radaufhängung
- 9: Radachse
- 10: Stabilisierungsstange
- 11: Lenkrad
- 11a: Oberer Greifbereich
- 11b: Unterer Greifbereich
- 11c: Querstrebe
- 11d: Nabe
- 11e: Abgeflachter Bereich
- 12: Lenksäule
- 13: Lenksäulenlager
- 14: Lenkradstellantrieb
- 15: Lenkradstellungssensor
- 16: Kombiinstrument
- 17: Signallampen
- 18: Rundinstrument
- 19: Multifunktionsbildschirm
- 20: Kamera
- 21: Statusanzeige
- 22: Fahrersitz
- 23: Zündschloss
- 24: Zündschlüssel
- 25: Fahrantrieb (Motor/Getriebeeinheit mit Kupplung)
- 26: Antriebsstrang
- 27: Differential
- 200: Prozess zur Lenksystemsteuerung
- 201-299: Prozess-Schritte
- 300: Prozess zur Neutralwinkelstellung
- 301-399: Prozess-Schritte
- 400: Prozess zur Proportionalwinkelstellung
- 401-499: Prozess-Schritte

- LRW: Lenkradwinkel
- NW: Neutralwinkel (Neutralstellung)
- PW: Proportionalwinkel (Stellung entsprechend RLW)
- RLW: Radlenkwinkel (Radeinschlag)
- Tol: Toleranz

## Patentansprüche

1. Verfahren (200) zum Betreiben eines Lenksystems (1) eines Fahrzeugs (100), wobei das Lenksystem (1) ein Lenkrad (11), ein lenkbares Rad (2), wobei das lenkbare Rad (2) und das Lenkrad (11) mechanisch entkoppelt sind, einen Lenkradstellantrieb (14) zum Stellen einer Drehstellung des Lenkrades (11), einen Radlenkantrieb (4) zum Lenken des lenkbaren Rades (2), und ein Steuergerät (6) zum Ansteuern des Radlenkantriebs (4) und des Lenkradstellantriebs (14) aufweist,
**dadurch gekennzeichnet, dass**
das Lenkrad (11) durch den Lenkradstellantrieb (14) auf Veranlassung des Fahrers unabhängig von einem Zustand der Zündung, auf Bestätigung durch den Fahrer oder durch Rückmeldung einer auf den Fahrer gerichteten Kamera automatisch in eine von einem Radeinschlag (RLW) des lenkbaren Rades (2) unabhängige Neutralstellung (NW) gestellt wird.

2. Verfahren (200) nach Anspruch 1,
**dadurch gekennzeichnet, dass**
das Lenkrad (11) durch den Lenkradstellantrieb (14) auf Bestätigung durch den Fahrer oder durch Rückmeldung der auf den Fahrer gerichteten Kamera automatisch in eine Stellung (PW) entsprechend einem Radeinschlag (RLW) des lenkbaren Rades (2) gestellt wird.

3. Verfahren (200) nach Anspruch 1 oder 2,
**dadurch gekennzeichnet, dass**
das Lenkrad (11) durch den Lenkradstellantrieb (14) auf Veranlassung des Fahrers in die Stellung (PW) entsprechend einem Radeinschlag (RLW) des lenkbaren Rades (2) gestellt wird.

4. Verfahren (200) nach einem der vorstehenden Ansprüche,
**dadurch gekennzeichnet, dass**
das Stellen des Lenkrades (11) in die Neutralstellung (NW) nur dann ermöglicht wird, wenn sich das Fahrzeug (100) im Stillstand befindet.

5. Verfahren (200) nach einem der vorstehenden Ansprüche,
**dadurch gekennzeichnet, dass**
ein Wegfahren des Fahrzeug (100) verhindert wird, wenn sich das Lenkrad (11) in der Neutralstellung (NW) befindet und die Neutralstellung (NW) nicht einem Radeinschlag (RLW) des lenkbaren Rades (2) entspricht.

6. Verfahren (200) nach einem der vorstehenden Ansprüche,
**dadurch gekennzeichnet, dass**
die Neutralstellung (NW) eine Stellung ist, in welcher eine freie Sicht des Fahrers auf vorbestimmte Bereiche eines Kombiinstruments (16) des Fahrzeugs (100) ermöglicht wird, vorzugsweise auf eine Kamera (20) zur Fahrerbeobachtung, einen Multifunktionsbildschirm (19), eine Statusanzeige (21), eine Kilometerstandsanzeige, eine Tankanzeige oder eine Signallampe (17), und/oder in welcher ein abgeflachter Abschnitt des Lenkrades (11) nach unten zu stehen kommt.

7. Lenksystem (1) eines Fahrzeugs (100), wobei das Lenksystem (1) ein Lenkrad (11), ein lenkbares Rad (2), wobei das lenkbare Rad (2) und das Lenkrad (11) mechanisch entkoppelt sind, einen Lenkradstellantrieb (14) zum Stellen einer Drehstellung des Lenkrades (11), einen Radlenkantrieb (4) zum Lenken des lenkbaren Rades (2), und ein Steuergerät (6) zum Ansteuern des Radlenkantriebs (4) und des Lenkradstellantriebs (14) aufweist,
**dadurch gekennzeichnet, dass**
das Steuergerät (6) ausgebildet ist, das Lenksystem (100) durch ein Verfahren (200) gemäß einem der vorstehenden Ansprüche zu betreiben.

8. Fahrzeug (100) mit einem Lenksystem (1), welches ein Lenkrad (11), ein lenkbares Rad (2), wobei das lenkbare Rad (2) und das Lenkrad (11) mechanisch entkoppelt sind, einen Lenkradstellantrieb (14) zum Stellen einer Drehstellung des Lenkrades (11), einen Radlenkantrieb (4) zum Lenken des lenkbaren Rades (2), und ein Steuergerät (6) zum Ansteuern des Radlenkantriebs (4) und des Lenkradstellantriebs (14) aufweist,
**dadurch gekennzeichnet, dass**
das Lenksystem (100) gemäß Anspruch 7 ausgebildet ist.

## Claims

1. Method (200) for operating a steering system (1) of a vehicle (100), wherein the steering system (1) has a steering wheel (11), a steerable wheel (2), wherein the steerable wheel (2) and the steering wheel (11) are mechanically decoupled, a steering wheel actuator (14) for setting a rotational position of the steering wheel (11), a wheel steering drive (4) for steering the steerable wheel (2) and a control device (6) for actuating the wheel steering drive (4) and the steering wheel actuator (14), **characterised in that** the steering wheel (11) is automatically placed in a neutral position (NW) independent of a wheel angle (RLW) of the steerable wheel (2) by the steering wheel actuator (14) on the initiative of the driver irrespective of a state of ignition, upon confirmation by the driver or by way of a response from a camera directed at the driver.

2. Method (200) according to claim 1, **characterised in that** the steering wheel (11) is automatically placed in a position (PW) corresponding to a wheel angle (RLW) of the steerable wheel (2) by the steering wheel actuator (14) upon confirmation by the driver or by way of a response from the camera directed at the driver.

3. Method (200) according to claim 1 or 2, **characterised in that** the steering wheel (11) is placed in the position (PW) corresponding to a wheel angle (RLW) of the steerable wheel (2) by the steering wheel actuator (14) on the initiative of the driver.

4. Method (200) according to any one of the preceding claims, **characterised in that** placing the steering wheel (11) in the neutral position (NW) is enabled only when the vehicle (100) is stationary.

5. Method (200) according to any one of the preceding claims, **characterised in that** the vehicle (100) is prevented from moving away when the steering wheel (11) is in the neutral position (NW) and the neutral position (NW) does not correspond to a wheel angle (RLW) of the steerable wheel (2).

6. Method (200) according to any one of the preceding claims, **characterised in that** the neutral position (NW) is a position in which the driver is provided with a clear sight of predetermined regions of an electronic instrument cluster (16) of the vehicle (100), preferably a camera (20) for driver observation, a multi-functional monitor (19), a status display (21), a kilometre reading display, a tank display or a signal lamp (17) and/or in which a flattened portion of the steering wheel (11) comes to rest below.

7. Steering system (1) of a vehicle (100), wherein the steering system (1) has a steering wheel (11), a steerable wheel (2), wherein the steerable wheel (2) and the steering wheel (11) are mechanically decoupled, a steering wheel actuator (14) for setting a rotational position of the steering wheel (11), a wheel steering drive (4) for steering the steerable wheel (2) and a control device (6) for actuating the wheel steering drive (4) and the steering wheel actuator (14), **characterised in that** the control device (6) is designed to operate the steering system (100) by way of a method (200) according to any one of the preceding claims.

8. Vehicle (100) with a steering system (1) which has a steering wheel (11), a steerable wheel (2), wherein the steerable wheel (2) and the steering wheel (11) are mechanically decoupled, a steering wheel actuator (14) for setting a rotational position of the steering wheel (11), a wheel steering drive (4) for steering the steerable wheel (2) and a control device (6) for actuating the wheel steering drive (4) and the steering wheel actuator (14), **characterised in that** the steering system (100) is designed according to claim 7.

## Revendications

1. Procédé (200) destiné au fonctionnement d'un système de direction (1) d'un véhicule (100), dans lequel le système de direction (1) comporte un volant (11), une roue (2) orientable, ladite roue (2) orientable et ledit volant (11) étant découplé d'un point de vue mécanique, un actionneur de volant (14) destiné à régler une position en rotation du volant (11), un actionneur de roue (4) destiné à orienter la roue (2) orientable et un appareil de commande (6) destiné à commander l'actionneur de roue (4) et l'actionneur de volant (14),
**caractérisé en ce que**, suite à une commande du conducteur indépendamment d'un état de l'allumage, suite à une confirmation par le conducteur ou par une réponse d'une caméra orientée sur le conducteur, le volant (11) est automatiquement mis par l'actionneur de volant (14) dans une position neutre (NW) indépendante d'un braquage de roue (RLW) de la roue (2) orientable.

2. Procédé (200) selon la revendication 1, **caractérisé en ce que**, suite à une confirmation par le conducteur ou par une réponse de la caméra orientée sur le conducteur, le volant (11) est automatiquement mis par l'actionneur de volant (14) dans une position (PW) correspondant à un braquage de roue (RLW) de la roue (2) orientable.

3. Procédé (200) selon la revendication 1 ou 2, caractérisé-en ce que, suite à une commande du conducteur, le volant (11) est mis par l'actionneur de volant (14) dans la position (PW) correspondant à un braquage de roue (RLW) de la roue (2) orientable.

4. Procédé (200) selon l'une des revendications précédentes, **caractérisé en ce qu'**il n'est possible de mettre le volant (11) dans la position neutre (NW) que si le véhicule (100) se trouve à l'arrêt.

5. Procédé (200) selon l'une quelconque des revendications précédentes, **caractérisé en ce qu'**on empêche un départ du véhicule (100) lorsque le volant (11) se trouve dans la position neutre (NW) et que la position neutre (NW) ne correspond pas à un braquage de roue (RLW) de la roue (2) orientable.

6. Procédé (200) selon l'une quelconque des revendications précédentes, **caractérisé en ce que** la position neutre (NW) est une position dans laquelle une vue dégagée du conducteur sur des zones prédéterminées des instruments de bord (16) du véhicule (100) est possible, de préférence sur une caméra (20) destinée à l'observation du conducteur, sur un écran à multiples fonctions (19), sur un indicateur d'état (21), sur un indicateur de kilométrage, sur une jauge de carburant ou un voyant lumineux (17), et/ou dans laquelle une partie aplatie du volant (11) se trouve en bas.

7. Système de direction (1) d'un véhicule (100), dans lequel le système de direction (1) comporte un volant (11), une roue (2) orientable, ladite roue (2) orientable et ledit volant (11) étant découplé d'un point de vue mécanique, un actionneur de volant (14) destiné à régler une position en rotation du volant (11), un actionneur de roue (4) destiné à orienter la roue (2) orientable et un appareil de commande (6) destiné à commander l'actionneur de roue (4) et l'actionneur de volant (14),
**caractérisé en ce que** l'appareil de commande (6) est conçu pour faire fonctionner le système de direction (100) avec un procédé (200) selon l'une quelconque des revendications précédentes.

8. Véhicule (100) avec un système de direction (1), qui comporte un volant (11), une roue (2) orientable, ladite roue (2) orientable et ledit volant (11) étant découplé d'un point de vue mécanique, un actionneur de volant (14) destiné à régler une position en rotation du volant (11), un actionneur de roue (4) destiné à orienter la roue (2) orientable et un appareil de commande (6) destiné à commander l'actionneur de roue (4) et l'actionneur de volant (14),
**caractérisé en ce que** le système de direction (100) est conçu selon la revendication 7.
